# EUROPEAN PATENT APPLICATION

(11) **EP 2 138 064 A1**
(43) Date of publication of application: **30.12.2009**
(21) Application number: 08158959.0
(22) Date of filing: 25.06.2008
(51) Int. Cl.: A45C 11/00, A45C 3/00

(54) **A sleeve for a portable computer or the like**

(71) Applicant: Land Designlab ApS, 1456 Copenhagen K (DK)
(72) Inventor: Jauer, Sten, 2000, Frederiksberg (DK); Jorgensen, Mette Susanne, 2000, Frederiksberg (DK)
(74) Representative: HOEIBERG A/S

(57) **Abstract**

The present invention concerns a sleeve (1) for a portable computer (2) or a similar generally flat, rectangular item, said sleeve (1) comprising an elongated a tubular body (1) with an open end (4) for receiving an item and a closed end (5) where the item rests once entered into the tubular body (1), and wherein said tubular body (1) is generally rectangular in shape and made of a pliant and elastic material, and with a surplus length relative to the item and an undersize width relative to the item size in its relaxed position, so that the tubular body (1) has an item accommodating inner portion (11) and a surplus outer portion (12) exceeding the item once the item is positioned in the tubular body (1) contracts, and that a substantial portion of the outer portion (12) is reversely folded back along the outside of the inner portion (11), whereby the innermost portion (13) of the outer portion (12) remains contracted relative to the item and thereby retains the item inside the tubular body (1).

## Description

The present invention relates to a sleeve for a portable computer or the like.

When transporting a portable computer, such as a laptop, special computer bags are often used. Such computer bags are designed for accommodating a computer of a particular size and are often provided with some internal padding for protecting the computer. There is also known special casings sized for the particular computer size in which the computer is placed and thereby protected during transport.

As laptops have become more and more common as a personal commodity, people are carrying their computer with them together with other items in larger bags suitable for containing both computers and other materials. In this case, the computer is unprotected against being scratched or the like by other items in the bag. To avoid this, the computer may be placed in a small computer casing which is sized so that the computer fits tightly therein.

By the invention there is provided a sleeve for a laptop computer or similar essentially flat rectangular item, which is simple and efficient in protecting the computer as well as easy in use and which fits all sizes.

Accordingly, there is provided a sleeve for a portable computer or a similar generally flat, rectangular item, said sleeve comprising a tubular body with an open end for receiving an item and a closed end where the items rests once entered into the tubular body, and wherein said tubular body is generally rectangular in shape and made of a pliant and elastic material, and with a surplus length relative to the item and an undersize width relative to the item size in its relaxed position, so that the tubular body has an item accommodating inner portion and a surplus outer portion exceeding the item once the item is positioned in the tubular body contracts, and that a substantial portion of the outer portion is reversely folded back along the outside of the inner portion, whereby the innermost portion of the outer portion remains contracted relative to the item and thereby retains the item inside the tubular body.

In an embodiment of the invention, the tubular body has a uniform elasticity in both directions and in all portions thereof. Hereby, the tubular body can easily be sized to fit closely around items of different sizes. In a preferred embodiment of the invention, the tubular body material is made of a knitted garment, such as wool, cotton, polyester, acrylic material or any combination thereof, including one or more of these materials and/or other materials. These materials are protective against knocks and scratches and have a gentle feel and are easy in use and highly flexible, i.e. both elastic in terms of stretching and contraction as well as bending. However, it is realised by the invention that garment having different elastic characteristics in different directions are also suitable for use as sleeves according to the invention.

In a particular embodiment, an elastic band, e.g. rubber band, is provided for enhancing the contraction of the innermost portion of the outer portion of the tubular body. However, it is realised that the sleeve according to the invention may also function without an elastic band.

By an embodiment, the tubular body is an elongated bag. The rectangular item, such as the computer, has a length and a width of different sizes. By this elongated bag the computer is intended to be positioned in the bag with its shorter side downwards. However it is realised that a bag could be substantially quadratic and could also accommodate the computer if it is entered with its longer side downwards.

In the following, the invention is described in more detail with reference to the accompanying drawings, in which:
Figure 1 a) to h) show the use of an elastic sleeve according to a first embodiment of the invention, and
Figure 2 a) to e) show the use of an elastic sleeve according to a second embodiment of the invention.

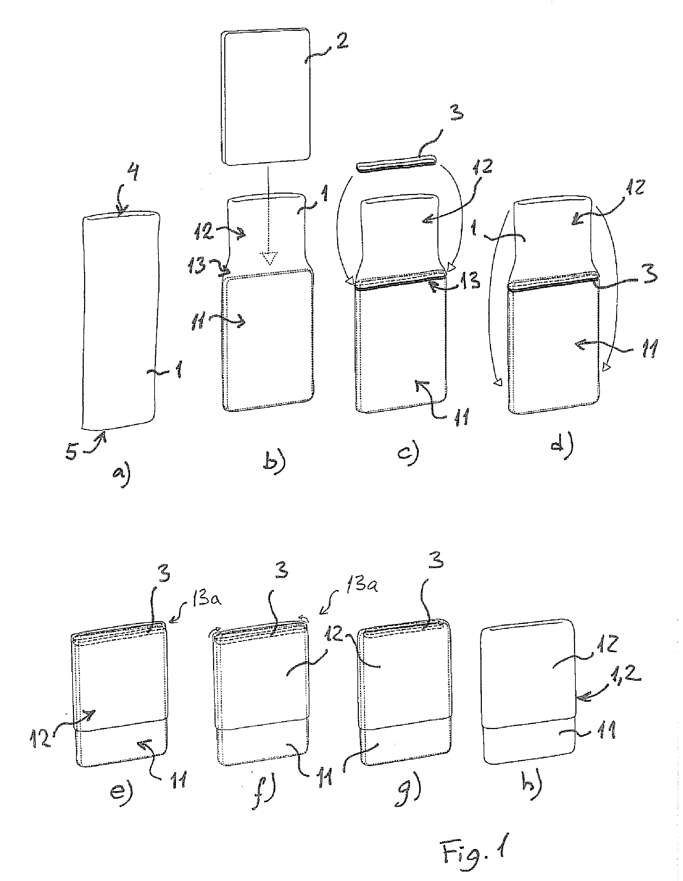

With reference to figure 1, the sleeve consists of a tubular body 1 having an open end 4 and a closed end 5, cf. fig. 1 a. The tubular body 1 is preferably made of an elastic garment, such as knitted garment made of wool, cotton and/or polyester or other suitable garment materials. As shown in fig. 1b, a laptop computer 2 is entered into the sleeve through the opening 4. The actual size of the computer divides the sleeve into an inner portion 11 and an outer portion 12. The inner portion 11 is stretched because of the presence of the computer 2 therein and the outer portion 12 is relatively contracted around the computer 2. The innermost portion 13 of the outer portion 11 is transition zone where the contraction naturally takes place due to the elasticity of the garment of the tubular body 1.

With reference to figure 1c, an elastic band, such as a rubber band, is placed around the sleeve at the innermost transition portion 13 of the outer portion 11. The elastic band 3 in its relaxed state has an annular length smaller than the size of the sleeve. The elastic band 3 is then stretched and moved to a position just below this transition portion 13 so the band 3 tightens around the sleeve and outer edge portion of the computer, see figures 1c and 1d. As indicated by the arrows in fig. 1 d) the outer portion 12 is then folded back around the band 3 to encircle the inner portion 11 as shown in fig. 1 e). Due to the stretchability of the garment, the band 3 inside the folded garment in the fold 13a is then lifted a bit so that the elastic relaxes and thereby contracts the sleeve immediately outside the upper edge of the computer, as indicated in figures 1 f) and g). Hereby, the computer 2 is substantially encased and the protective sleeve 1 is mounted on the computer 2 as shown in fig. 1 h) that the sleeve contracts around the opening in the fold and almost covers the computer therein. As an extra benefit, two pockets are thereby provided between the inner and outer portion as the outer portion 12 is shorter in length than the inner portion 11. These pockets are found useful for storage of paper copies or the like.

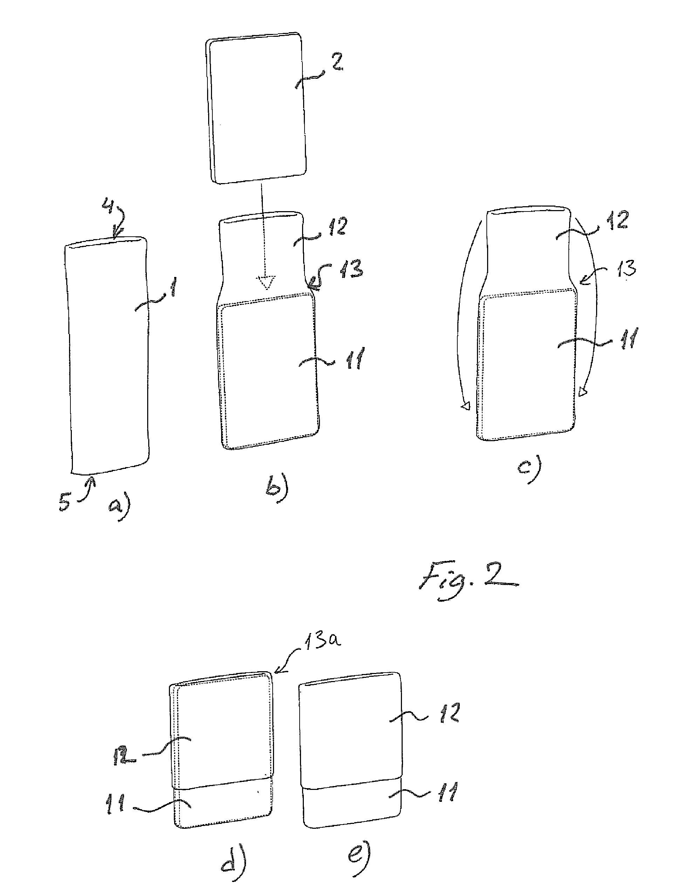

Another embodiment which may be more simple in use is shown in figure 2. Essentially, in comparison with the embodiment shown in figure 1, it is realised that the elastic band may be omitted in the mounting process of the sleeve. Accordingly, fig. 2a shows the sleeve 1, which may be the same as the sleeve shown in fig. 1 a. A computer, such as a laptop 2, is inserted through the opening 4 and into the bag formed by the tubular body 1, thereby dividing the tubular body 1 into an inner portion 11 and an outer portion 12 with a transition portion 13 therebetween (fig. 2b). The outer portion 12 is then folded, i.e. reversed outwards over the inner portion11 accommodating the computer, as shown in fig. 2c. This folding of the garment sleeve takes place in the transition portion 13. Once folded, the fold 13a is lifted slightly so the sleeve material in the fold 13a contracts and thereby encloses the computer inside the sleeve due to the elasticity of the garment material thereof.

The above embodiments are two specific embodiments of the invention. It is realised that other embodiments may be provided without departing from the scope of protection as defiled in the claims. For instance, the outer portion of the bag may be folded inwardly, i.e. inside the inner portion prior to the insertion of the computer but with an elastic band inserted into the bag prior to the folding. Although no accessible pocket is thereby achieved, a protective sleeve is nevertheless provided for the computer inserted therein.

## Claims

1. A sleeve for a portable computer or a similar generally flat, rectangular item, said sleeve comprising
a tubular body with an open end for receiving an item and a closed end where the items rests once entered into the tubular body, and wherein
said tubular body is generally rectangular in shape and made of a pliant and elastic material, and with a surplus length relative to the item and an undersize width relative to the item size in its relaxed position, so that the tubular body has an item accommodating inner portion and a surplus outer portion exceeding the item once the item is positioned in the tubular body contracts, and that a substantial portion of the outer portion is reversely folded back along the outside of the inner portion, whereby the innermost portion of the outer portion remains contracted relative to the item and thereby retains the item inside the tubular body.

2. A sleeve according to claim 1, wherein the tubular body material is made of a knitted garment, such as wool, cotton, polyester, acrylic material or any combination thereof.

3. A sleeve according to claim 1 or 2, wherein an elastic band is provided for enhancing the contraction of the innermost portion of the outer portion of the tubular body.

4. A sleeve according to any of claims 1 to 3, wherein the tubular body has a substantially uniform elasticity in both directions and in all portions thereof.

5. A sleeve according to any of claims 1 to 4, wherein the tubular body is an elongated bag.
